# EUROPÄISCHE PATENTANMELDUNG

(11) **EP 0 909 910 A2**
(43) Veröffentlichungstag der Anmeldung: **21.04.1999**
(21) Anmeldenummer: 98119275.0
(22) Anmeldetag: 13.10.1998
(51) Int. Cl.: F16K 11/085

(54) **3-Wege-Mischventil**

(30) Priorität: 17.10.1997 DE 19745913
(71) Anmelder: HONEYWELL AG, 63067 Offenbach (DE)
(72) Erfinder: Kluth Hans-Ulrich Dipl.-Ing., 71093 Weil im Schönbuch (DE); Müller, Wolfgang, 71101 Schönaich (DE)
(74) Vertreter: Herzbach, Dieter, Dipl.-Ing.

(57) **Zusammenfassung**

Es wird ein 3-Wege-Mischventil (10) zur Steuerung eines Mediums angegeben, dessen Gehäuse (12) mit drei, um jeweils 90° zueinander versetzten Anschlüssen (14, 16, 18) versehen ist. Diese Anschlüsse führen über Fenster (26, 28, 30) in einen Mischraum (20), in welchem ein Mischerküken (22) die Aufteilung des Mediums zwischen den Anschlüssen (14, 16, 18) steuert. Die Fenster (26, 28, 30) sind unter einem Winkel von 120° zueinander versetzt angeordnet und die maximale Fensteröffnung - gebildet aus der gemeinsamen Öffnung von Mischerküken (22) und Gehäuse (12) erstreckt sich über höchstens 90°.

## Beschreibung

Die vorliegende Erfindung bezieht sich auf ein 3-Wege-Mischventil nach dem Gattungsbegriff des Patentanspruches 1.

In Warmwasser-Zentralheizungen gelangen heutzutage Kompakt-Mischer sowohl in 3-Wege- als auch in 4-Wege-Ausführung zur Anwendung. Hierbei wird Wert darauf gelegt, daß bei beiden Mischertypen die Anschlüsse rundum vertauschbar sind.

Ein derartiges Mischventil ist z.B. aus der DE-OS 20 38 085 bekannt. Bei diesem bekannten 3-Wege-Mischventil sind die äußeren Anschlüsse zwar um 90° zueinander versetzt, die in den Mischraum führenden Fenster sind aber um 120° zueinander versetzt, wodurch sich eine Vertauschbarkeit der Anschlußstutzen ergibt. Das bekannte 3-Wege-Mischventil benötigt aber weiterhin einen Stellmotor mit einem Verstellwinkel von 120°. Andererseits benötigen 4-Wege-Mischmotoren einen Stellmotor mit einem Verstellwinkel von 90°. Aus Gründen der Rationalisierung wäre es aber erwünscht, beide Mischertypen mit ein und demselben Stellmotor betreiben zu können.

Die vorliegende Erfindung löst diese Aufgabe durch eine Ausgestaltung eines 3-Wege-Mischventils gemäß den kennzeichnenden Merkmalen des Patentanspruches 1. Diese Ausgestaltung führt zu einem rundum vertauschbaren 3-Wege-Mischventil, dessen Stellmotor nur einen Verstellwinkel von 90° benötigt. Weitere vorteilhafte Ausgestaltungen des erfindungsgemäßen Mischventils sind den abhängigen Ansprüchen entnehmbar.

Anhand von in den Figuren der beiliegenden Zeichnung dargestellten Ausführungsbeispielen sei im folgenden die Erfindung näher erläutert. Es zeigen:
- Figuren 1a, b: eine erste Ausführungsform eines 3-Wege-Mischventils gemäß der vorliegenden Erfindung in zwei verschiedenen Stellungen;
- Figuren 2a, b: eine Modifikation der Ausführungsform gemäß Figur 1a, b.
- Figur 3: eine zweite Ausführungsform eines 3-Wege-Mischventils gemäß der Erfindung; und
- Figuren 4a, b, c: das Mischventil gemäß Figur 3 in drei verschiedenen Einbaulagen.

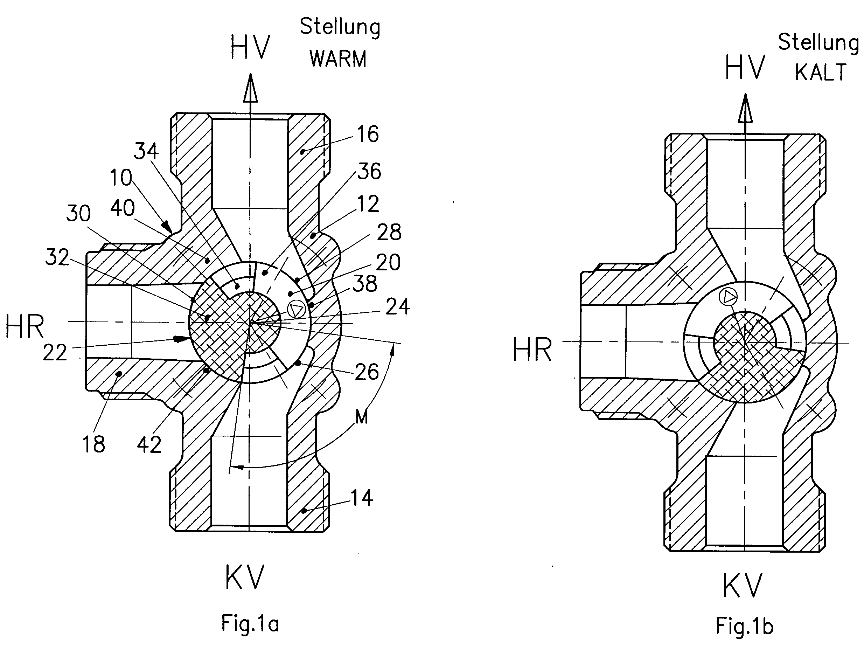

Gemäß den Figuren 1a, b umfaßt ein 3-Wege-Mischventil 10 ein T-förmiges Gehäuse 12 mit drei Anschlußstutzen 14, 16 und 18, die mittels nicht dargestellter Überwurfmuttern an einen Kesselvorlauf KV, einen Heizungsvorlauf HV und einen Heizungsrücklauf HR anschließbar sind. Über einen nicht-dargestellten abnehmbaren Deckel ist in einem kreiszylindrischen Innenraum 20 ein Mischerküken 22 eingesetzt, das um eine zentrale, senkrecht zur Zeichenebene stehende Achse 24 drehbar ist. Die Achse 24 steht hierbei senkrecht zu dem Schnittpunkt der sich schneidenden Symmetrielinien der Ein- und Auslässe.

Die drei Anschlußstutzen 14, 16, 18 münden über Fenster 26, 28, 30 in dem Gehäuse 12 in den Innenraum 20, wobei die Mitten der Fenster 26, 28, 30 jeweils um 120° zueinander versetzt sind.

Das Mischerküken 22 weist eine Schließkontur 32, eine Regelkontur 34 zu beiden Seiten der Schließkontur 32 und einen vollständig offenen Durchlaßbereich 36 auf. Die Schließkontur 32 erstreckt sich über einen Winkel, der ausreichend ist, um jeweils ein Fenster 26, 28 oder 30 und einen Teil der angrenzenden, im Gehäuse 12 angeformten Stege 38, 40, 42 in der Schließstellung zu überdecken. Die Regelkontur 34 kann sich je nach der Regelanforderung über einen variablen Winkelbereich erstrecken.

Um das Ventil mittels einer Motordrehung um 90° (Stellwinkel M) von der in Figur 1a gezeigten Stellung, in der der Kesselvorlauf KV voll mit dem Heizungsvorlauf HV verbunden ist (Warm-Stellung), in die entgegengesetzte in Figur 1b gezeigte Stellung zu bringen, in der der Heizungsrücklauf HR mit dem Heizungsvorlauf HV voll verbunden ist (Kalt-Stellung), muß die Bedingung erfüllt sein, daß die maximale Fensteröffnung - gebildet aus der gemeinsamen Öffnung von Mischerküken 22 und Gehäuse 12 - sich über höchstens 90° erstreckt.

In Figur 1b ist gezeigt, wie mit einem Motor-Drehwinkel M von 90° das 3-Wege-Mischventil 10 durch Drehung seines Mischerkükens 22 aus der Stellung 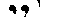 warm" in die andere Extremstellung 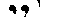 kalt" gebracht werden kann.

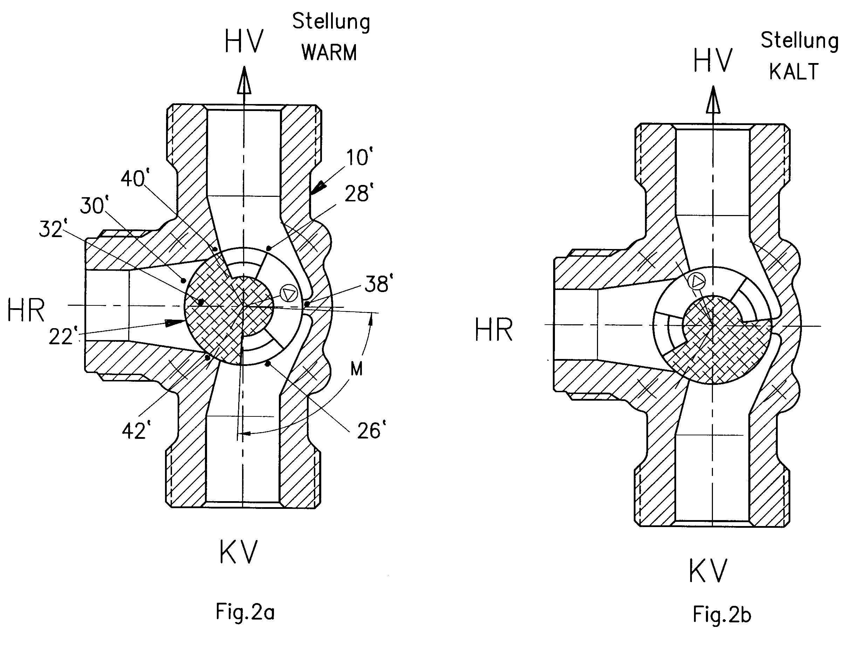

In den Figuren 2a, b ist ein gegenüber den Figuren 1a, b modifiziertes 3-Wege-Mischventil 10' dargestellt, das sich durch eine verringerte Breite der Stege 38', 40', 42', dementsprechend verbreiterte Fenster 26', 28', 30' und durch ein Mischerküken 22' mit einer sich über einen größeren Winkel erstrecken Schließkontur 32' auszeichnet.

Aber auch hier muß die vorstehend erwähnte Bedingung erfüllt sein, damit das Mischventil mit einem Motor-Drehwinkel M von 90° aus der Stellung 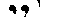 warm" in die andere Extremstellung 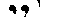 kalt" gebracht werden kann.

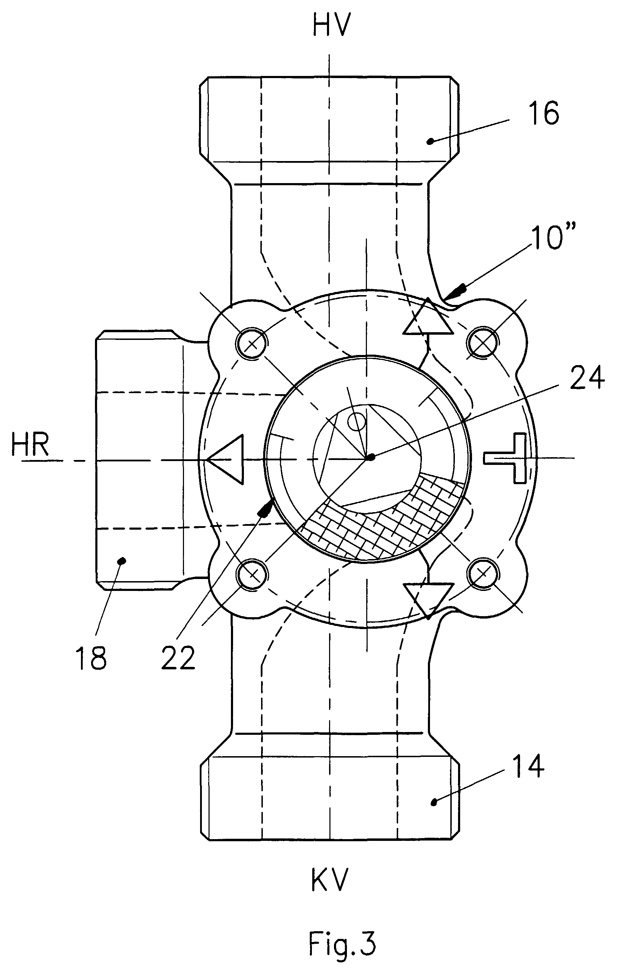

Die in Figur 3 gezeigte Modifikation des 3-Wege-Mischventiles 10'' zeichnet sich dadurch aus, daß die Drehachse 24 des Mischerkükens 22 einen seitlichen Versatz gegenüber dem Schnittpunkt der durch die Anschlußstutzen 14, 16, 18 verlaufenden Symmetrielinien aufweist. Eine solche Bauform führt zu einem kürzeren Anschlußmaß des seitlichen Anschlusses.

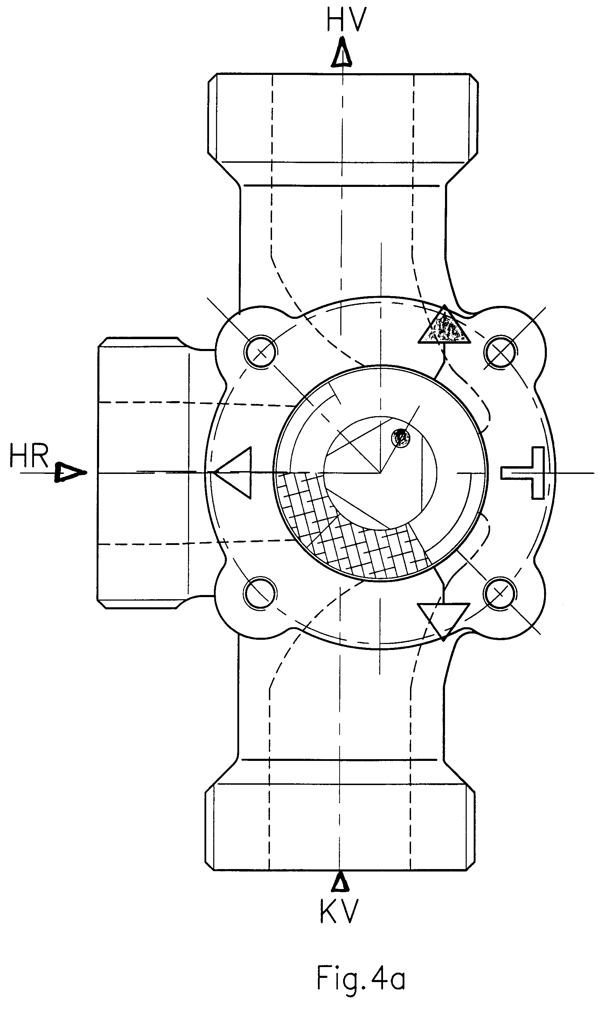

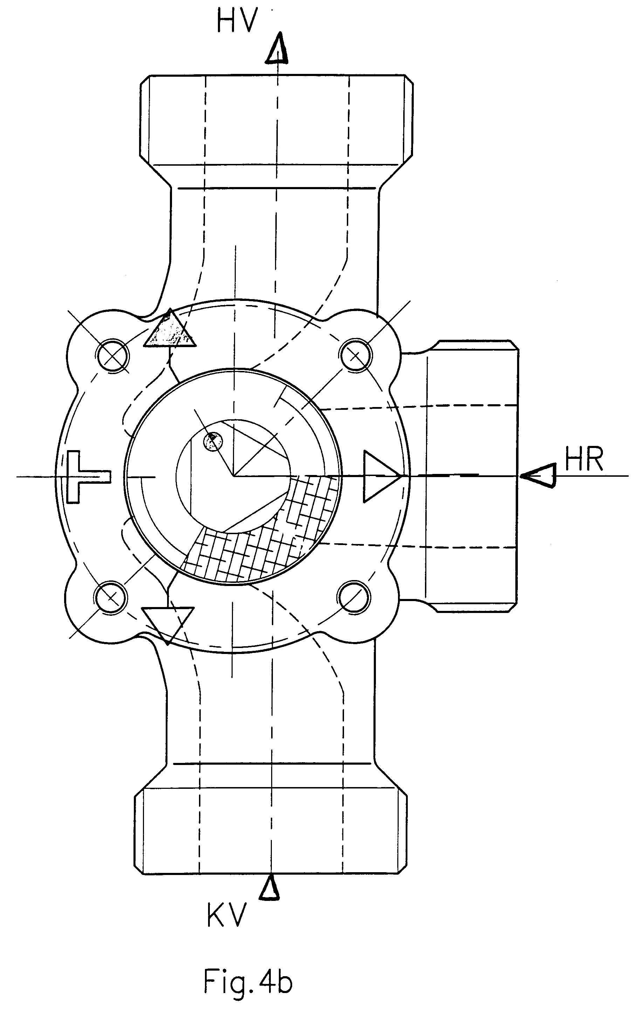

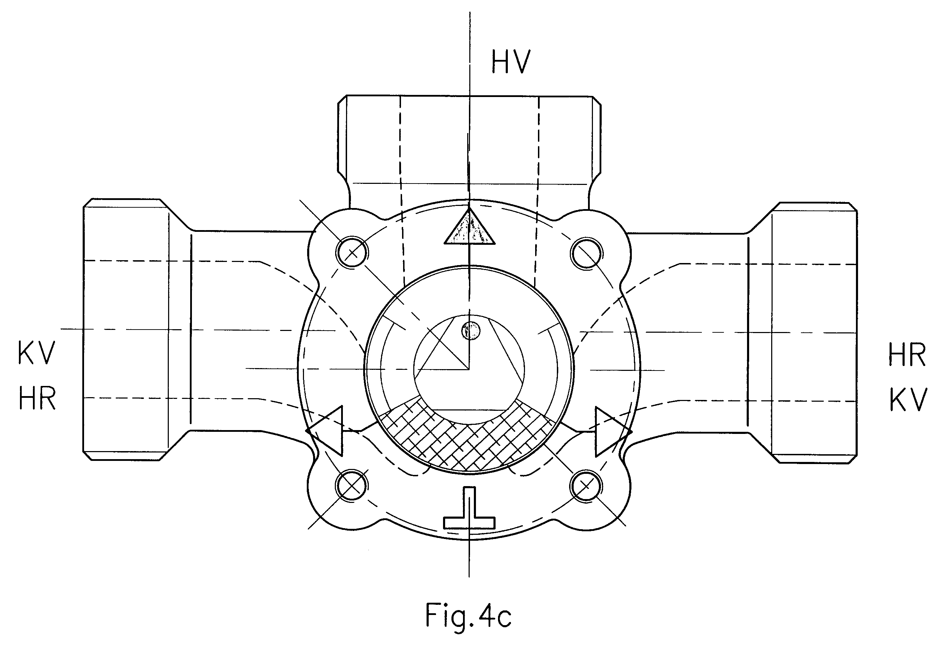

In den Figuren 4a, b, c ist das 3-Wege-Mischventil 10'' gemäß Figur 3 in verschiedenen Anschlußkonfigurationen dargestellt. So zeigt Figur 4a das Mischventil mit geradem Durchgang, mit dem Anschluß des Kesselvorlaufes KV von unten, dem Anschluß des Heizungsrücklaufes HR von links und dem Anschluß des Heizungsvorlaufes HV von oben. Figur 4b zeigt das Mischventil ebenfalls mit geradem Durchgang, wobei der Heizungsrücklauf HR von rechts angeschlossen ist und die übrigen Anschlüsse beibehalten wurden. Schließlich zeigt Figur 4c das Mischventil mit abgewinkeltem Durchgang, wobei es wahlweise möglich ist, bei Heizungsvorlauf HV nach oben den seitlichen Anschluß von Heizungsrücklauf HR und Kesselvorlauf KV zu vertauschen.

## Patentansprüche

1. 3-Wege-Mischventil zur Steuerung eines Mediums, aufweisend ein Gehäuse mit drei um jeweils 90° versetzten Anschlüssen, die über Fenster in einen Mischraum führen, in welchem ein Mischerküken die Aufteilung des Mediums zwischen den Anschlüssen steuert, wobei die Fenster unter einem Winkel von 120° zueinander versetzt angeordnet sind und das Mischerküken eine Schließkontur aufweist, mit der es eines der Fenster vollständig abschließen kann, **dadurch gekennzeichnet,** daß sich die maximale Fensteröffnung - gebildet aus der gemeinsamen Öffnung von Mischerküken (22) und Gehäuse (12) - über höchstens 90° erstreckt.

2. 3-Wege-Mischventil nach Anspruch 1, **dadurch gekennzeichnet,** daß das Mischerküken (22) symmetrisch ausgebildet ist und die Schließkontur (32) eine sich daran zu beiden Seiten anschließende, gleich ausgebildete Regelkontur (34) und einen Durchlaßbereich (36) zwischen den Regelkonturen (34) aufweist.

3. 3-Wege-Mischventil nach Anspruch 2, **dadurch gekennzeichnet,** daß die Drehachse (24) des Mischerkükens (22) durch den Schnittpunkt der Symmetrielinien der Anschlüsse (14, 16, 18) verläuft und senkrecht zu diesen steht.

4. 3-Wege-Mischventil nach Anspruch 2, **dadurch gekennzeichnet,** daß die Drehachse (24) des Mischerkükens (22) gegenüber dem Schnittpunkt der Symmetrielinien der Anschlüsse (14, 16, 18) seitlich versetzt ist und senkrecht zu diesen steht.

5. 3-Wege-Mischventil nach Anspruch 2, **dadurch gekennzeichnet,** daß sich die Schließkontur (32) des Mischerkükens (22) über einen Winkel erstreckt, der der Breite eines Fensters (26, 28, 30) und wenigstens der Breite eines die Fenster trennenden Steges (38, 40, 42) entspricht.
